Europäisches Patentamt

European Patent Office

Office européen des brevets

(19)

(11) **EP 1 094 390 B1**

(12) **FASCICULE DE BREVET EUROPEEN**

(45) Date de publication et mention
de la délivrance du brevet:
**14.05.2003 Bulletin 2003/20**

(51) Int Cl.⁷: **G06F 11/26**, G01R 31/28

(21) Numéro de dépôt: **00402227.3**

(22) Date de dépôt: **04.08.2000**

(54) **Procédé et dispositif de test du fonctionnement d'une unité électronique par simulation et installation de test d'unité à embarquer sur un matériel ferroviaire ou un véhicule électrique**

Verfahren und Gerät zur Funktionsprüfung einer elektronischen Einheit durch Simulation und Testanlage für eine auf einem Schienenfahrzeug oder einem elektrischen Fahrzeug zu montierende Einheit

Method and device for functional testing of an electronic unit using simulation and test system for units subsequently used on-board a railway equipment or an electrical vehicle

(84) Etats contractants désignés:
**AT BE CH CY DE DK ES FI FR GB GR IE IT LI LU MC NL PT SE**

(30) Priorité: **31.08.1999 FR 9911034**

(43) Date de publication de la demande:
**25.04.2001 Bulletin 2001/17**

(73) Titulaire: **Alstom**
**75116 Paris (FR)**

(72) Inventeur: **Miglianico, Denis**
**69160 Tassin (FR)**

(74) Mandataire: **Gosse, Michel et al**
**ALSTOM**
**Intellectual Property Department**
**25,avenue Kléber**
**75116 Paris (FR)**

(56) Documents cités:
**EP-A- 0 859 238**

• **WAGNER J R: "FAILURE MODE TESTING TOOL SET FOR AUTOMOTIVE ELECTRONIC CONTROLLERS" IEEE TRANSACTIONS ON VEHICULAR TECHNOLOGY,US,IEEE INC. NEW YORK, vol. 43, no. 1, février 1994 (1994-02), pages 156-163-163, XP000450957 ISSN: 0018-9545**
• **HANSELMANN H: "REAL-TIME SIMULATION REPLACES TEST DRIVES" TEST AND MEASUREMENT WORLD. (INC. ELECTRONICS TEST ),US,CAHNERS PUBLISHING, DENVER, vol. 16, no. 3, 15 février 1996 (1996-02-15), pages 35-36,38,40, XP000559454 ISSN: 0744-1657**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 094 390 B1

## Description

L'invention a trait à un procédé et à un dispositif de test du fonctionnement d'une unité électronique par simulation. L'invention a également trait à une installation de test d'unités électroniques à embarquer sur un matériel ferroviaire ou un véhicule électrique.

Dans le domaine de la commande électronique de systèmes de traction pour matériel ferroviaire, il est connu d'utiliser des unités électroniques fonctionnant en temps réel et prévues pour commander des circuits électroniques tels que des circuits GTO (Gate Turn-Off thyristor) ou IGBT (Insulated Gate Bipolar Transistor), des relais basse tension ou des afficheurs numériques ou analogiques. Ces unités incluent un calculateur apte à générer des signaux de commande en fonction de signaux reçus en entrée par l'unité, ces signaux d'entrée pouvant être une consigne, des signaux représentatifs d'état de relais basse tension, des signaux représentatifs de courant, de tension ou de puissance consommée et/ou des signaux émis par un réseau informatique embarqué. Pour la commande efficace des circuits électroniques du genre GTO ou IGBT, les signaux de commande émis par une telle unité électronique doivent être positionnés dans le temps avec une précision de l'ordre de la micro-seconde.

Une telle unité de commande étant un matériel complexe, il est connu de réaliser un banc de test comprenant un simulateur apte à générer des signaux de simulation fournis en entrée à l'unité et à analyser les signaux de commande générés par une telle unité. Un tel simulateur fonctionne en temps réel et simule, par exemple, le moteur, les freins ou l'inertie d'une motrice ferroviaire, de même que l'état des rails ou d'autres paramètres extérieurs. Un seul type de simulateur est utilisé pour le test du fonctionnement de différentes unités électroniques, le fonctionnement du simulateur étant adapté par programmation selon le type et l'utilisation de l'unité. Un tel simulateur comprend un ou plusieurs microprocesseurs destinés à traiter des signaux émis par l'unité afin de lui adresser de nouveaux signaux de simulation. Un tel simulateur est de type "hardware in the loop" ou "matériel dans la boucle de simulation".

Un tel simulateur est, par exemple, décrit dans le document XP 000 559 454, "Test & Measurement World, Volume 16, N°3, 15 Février 1996, pages 35-36, 38 et 40, HANSELMANN H. et AL.

Or, compte tenu des traitements informatiques qu'ils doivent effectuer, les programmes de simulation fonctionnent avec un temps de cycle de l'ordre de quelques dizaines de micro-secondes, ce temps de cycle étant largement supérieur à la précision recherchée, de l'ordre d'une micro-seconde pour l'unité électronique. En d'autres termes, lorsqu'il a acquis un signal généré par l'unité à contrôler, le microprocesseur ou calculateur travaille "en aveugle" pendant plusieurs dizaines de micro-secondes avant de générer un nouveau signal de simulation. On pourrait envisager d'interrompre fréquemment le fonctionnement du microprocesseur, par exemple toutes les micro-secondes, pour acquérir une nouvelle valeur de signal émis par l'unité, mais ceci perturberait de façon importante le fonctionnement du calculateur qui ne pourrait plus gérer les nombreuses valeurs acquises. En outre, une telle solution n'est pas techniquement utilisable dans le cas où l'on recherche une précision de l'ordre de la micro-seconde.

C'est à ces inconvénients qu'entend plus particulièrement remédier l'invention en proposant un procédé qui permet de simuler une unité électronique en temps réel avec une grande précision, une grande stabilité des signaux simulés et un contrôle efficace des signaux émis par cette unité.

Dans ce but, l'invention concerne un procédé tel que defini dans la revendication 1 qui consiste à traiter, au fur et à mesure de leur émission, certains signaux de sortie de l'unité électronique, au moyen d'au moins un circuit logique programmable, à stocker des valeurs de paramètre correspondant à ces signaux traités et à faire accéder le microprocesseur du simulateur à ces valeurs de paramètres stockées à une fréquence compatible avec sa vitesse de fonctionnement.

Grâce à l'invention, le circuit logique programmable permet d'acquérir avec une grande rapidité, c'est-à-dire en temps réel, les signaux de sortie générés par l'unité, qui peuvent être des ordres de commande de circuit GTO ou IGBT, et ce alors que le microprocesseur du simulateur est en train d'effectuer des opérations de calcul. Au terme de ces opérations de calcul, c'est-à-dire par exemple après une période de 10 millisecondes, le microprocesseur peut alors acquérir les valeurs traitées par le circuit logique programmable pendant cette période, ces valeurs étant stockées dans une mémoire tampon. Ainsi, le positionnement dans le temps et la valeur des signaux émis par l'unité électronique peuvent être connus avec précision sans perturber le fonctionnement du microprocesseur du simulateur.

Selon des aspects avantageux de l'invention, le procédé incorpore une ou plusieurs des caractéristiques suivantes :

- Les valeurs de paramètre stockées sont représentatives des instants de commutation de signaux logiques générés par l'unité. En particulier, ces valeurs peuvent être une image des instants de commutation, de la durée pendant laquelle une variable logique a une valeur prédéterminée et/ou de la moyenne de la valeur d'une variable logique sur une période prédéterminée. Ainsi, en fonction du type de variable contrôlée par le simulateur, celui-ci peut acquérir en une fois et rapidement, des informations représentatives des différentes valeurs instantanées des signaux au cours de la période considérée.
- Il consiste à adresser certains au moins des signaux générés par le microprocesseur à au moins un second circuit logique programmable et à adresser à l'unité électronique des signaux de simulation générés par ce second circuit logique programmable, alors que le microprocesseur n'est pas en communication avec l'unité. En d'autres termes, les ordres générés par le microprocesseur sont délivrés à l'unité électronique par le second circuit logique programmable pendant une période dans lequel le microprocesseur est occupé, par exemple pour le calcul des prochains paramètres de commande. Grâce à cet aspect de l'invention, il est possible de commander l'unité avec des signaux émis avec une très grande précision, de l'ordre de la micro-seconde, ce qui est représentatif de certains capteurs, tels qu'un capteur de vitesse incrémental, qui peut détecter la position d'encoches sur un disque avec une précision largement inférieure à quelques dizaines de micro-secondes.

L'invention concerne également un dispositif tel que defini dans la revendication 5 permettant de mettre en oeuvre le procédé tel que précédemment décrit et, plus spécifiquement, un dispositif qui inclut un simulateur comprenant au moins un microprocesseur et apte à adresser à l'unité des signaux de simulation en entrée et à recevoir de celle-ci des signaux de sortie en réaction. Le simulateur comprend au moins un circuit logique programmable apte à recevoir certains au moins des signaux de sortie générés par l'unité, ce circuit logique étant apte à générer, en temps réel, des valeurs de paramètre correspondant aux signaux qu'il reçoit et à stocker ces valeurs, le micro-processeur étant apte à acquérir ces valeurs stockées.

Grâce à l'invention, le circuit logique programmable permet de capturer, en temps réel, les ordres ou signaux de sortie envoyés par l'unité électronique pendant un cycle de travail du microprocesseur, le microprocesseur utilisant les valeurs accumulées, par exemple dans une mémoire tampon, à chacun de ses cycles de travail.

Selon des aspects avantageux de l'invention, le dispositif comprend une ou plusieurs des caractéristiques suivantes :

- Au moins un second circuit logique programmable du simulateur est apte à adresser, en temps réel, des signaux de simulation à l'unité, à partir de signaux de consigne préalablement émis par le microprocesseur. Grâce à cet aspect de l'invention, le découplage entre le fonctionnement du programme du microprocesseur, avec un temps de cycle de l'ordre de quelques dizaines de micro-secondes, et celui de l'unité, qui doit pouvoir réagir, avec une précision de l'ordre de la micro-seconde, voire moins en fonction des évolutions technologiques, à des signaux émis à n'importe quel instant, est utilisé à la fois en entrée et en sortie de l'unité électronique. Dans ce cas, les premier et second circuits logiques précités sont avantageusement réalisés physiquement dans un même circuit électronique.
- Le ou les circuits logiques programmables est ou sont de type FPGA (Field Programmable Gate Array - Réseau de Portes Programmables par l'utilisateur). Un circuit FPGA est, comme un microprocesseur, un composant programmable par logiciel. L'utilisation de ce type de composant rapide, en association avec un processeur programmable, permet de concevoir des simulateurs de processus en temps réel génériques, adaptables à tout type de processus, c'est-à-dire à tout type d'unités électroniques et à leurs conditions d'utilisation.
- Le simulateur comprend en outre un convertisseur analogique/numérique, permettant de transmettre au microprocesseur des signaux numériques représentatifs de signaux analogiques générés par l'unité, et/ou un convertisseur numérique analogique, permettant de transmettre à l'unité des signaux analogiques de simulation à partir de signaux numériques générés par le microprocesseur.
- Le ou les circuits logiques sont programmés en fonction du type et/ou de l'utilisation prévue de l'unité.

L'invention concerne enfin une installation de test d'unités électroniques telle que definie dans la revendication 11, à embarquer sur un matériel ferroviaire ou un véhicule électrique, tel qu'un bus ou analogue, qui comprend au moins un dispositif tel que précédemment décrit. Une telle installation fonctionne de façon précise et peut être configurée en fonction des unités électroniques à contrôler et de leur environnement, par exemple du type de matériel sur lequel elles doivent être embarquées, tel qu'un train, un train à grande vitesse, un tramway, un bus, etc...

L'invention sera mieux comprise et d'autres avantages de celle-ci apparaîtront plus clairement à la lumière de la description qui va suivre de deux modes de réalisation d'un dispositif de test du fonctionnement d'une unité électronique conforme à son principe et de son mode de fonctionnement, donnée uniquement à titre d'exemple et faite en référence aux dessins annexés dans lesquels :

- la figure 1 est une représentation schématique de principe d'un dispositif de test du fonctionnement d'une unité électronique conforme à l'invention ;
- la figure 2 est une représentation schématique de principe de l'évolution des valeurs d'un paramètre généré par l'unité électronique de la figure 1 sur une période ΔT et
- la figure 3 est une représentation analogue à la figure 1 pour un dispositif conforme à un second mode de réalisation de l'invention.

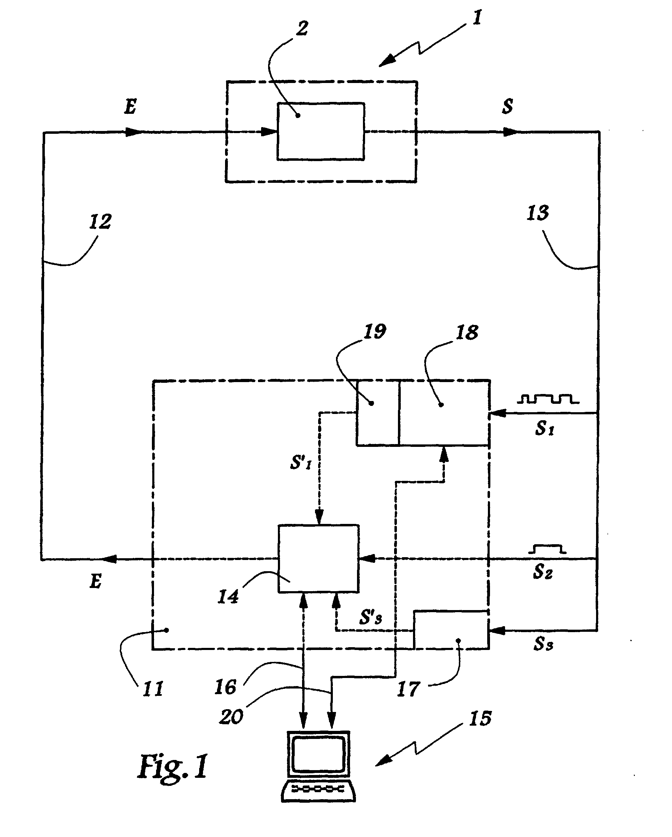

L'unité électronique 1 représentée à la figure 1 est prévue pour être embarquée, par exemple sur une motrice de train, afin de commander un moteur de traction. Elle comprend un microprocesseur 2 apte à générer des signaux de commande ou signaux de sortie S, en fonction de signaux d'entrée E délivrés par des systèmes de mesure ou des unités électroniques de commande maîtres.

Avant son installation dans la motrice considérée, l'unité 1 est connectée à un simulateur 11 au moyen de deux faisceaux 12 et 13 de conducteurs électriques. Plus précisément, le faisceau 12 relie la sortie du simulateur 11 à l'entrée de l'unité 1 alors que le faisceau 13 relie la sortie de l'unité 1 à la ou aux entrées du simulateur 11. Le faisceau 12 permet donc de véhiculer des signaux E de simulation en entrée de l'unité 1 alors que le faisceau 13 permet de véhiculer, jusqu'au simulateur 11, des signaux de sortie S de générés par l'unité 1 et qui constituent des signaux de commande de matériel embarqués sur la motrice.

Le simulateur 11 inclut un programme qui s'exécute sur un microprocesseur 14, par exemple du type DSP (Digital Signal Processor) avec un temps de cycle de l'ordre de quelques dizaines de micro-secondes et qui est apte à générer les signaux de simulation E. Ces signaux de simulation peuvent représenter des signaux d'état de relais basse tension, des signaux émis par des capteurs en courant ou en tension, tels que des capteurs incrémentaux, ou des consignes générées par une ou plusieurs unités électroniques maîtres et transmises par un réseau informatique. Le microprocesseur peut être relié à une console 15 pour sa programmation et son contrôle, de même que pour l'affichage du résultat du test. Une liaison électrique 16 est prévue à cet effet.

Les signaux de sortie S générés par l'unité 1 se décomposent en signaux rapides $S_1$, en signaux relativement lents $S_2$ et en signaux analogiques $S_3$.

Les signaux relativement lents sont des signaux de commande dont le positionnement dans le temps doit être connu avec une précision de l'ordre de la milli-seconde, ce qui est compatible avec le temps de cycle du microprocesseur 14. Ces signaux peuvent donc être transmis directement au microprocesseur 14 qui acquiert leur valeur une fois par temps de cycle, c'est-à-dire toutes les quelques dizaines de micro-secondes.

Les signaux $S_3$ sont transmis à un convertisseur analogique/numérique 17 (ADC) qui transmet un signal numérique correspondant $S'_3$ au microprocesseur 14.

Les signaux $S_1$ sont susceptibles d'évoluer plusieurs fois au cours d'une période $\Delta T$ de quelques dizaines de micro-secondes et leurs instants d'évolution ou de commutation doivent être connus avec précision. Ces signaux $S_1$ peuvent être par exemple des signaux de commande de circuits GTO ou IGBT ou de relais.

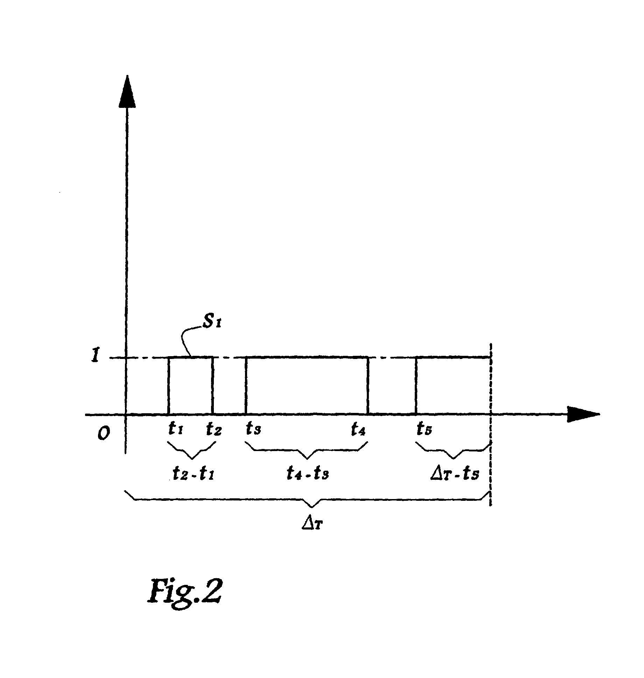

Comme il ressort de la figure 2, un signal $S_1$ peut prendre les valeurs logiques 0 ou 1 et son évolution au cours d'une période $\Delta T$ peut être caractérisée par ses instants de commutation $t_1$, $t_2$, $t_3$, $t_4$ et $t_5$. Chaque signal $S_1$ est transmis à une entrée d'un circuit logique programmable 18 de type FPGA qui est capable de détecter les instants $t_1$ à $t_5$ au cours d'une période $\Delta T$, de même que les sens de variation du signal $S_1$ au cours de cette période. Le circuit 18 réagit avec une très grande précision aux variations du signal $S_1$ car il s'agit d'un circuit constitué de portes logiques ET, OU et de bascules, qui peut avoir un temps de cycle inférieur à la micro-seconde.

Les valeurs détectées par le circuit 18 sont transmises, éventuellement après un traitement logique, à une mémoire tampon 19 à laquelle le microprocesseur 14 peut accéder au terme de chacune de ses périodes de travail, soit toutes les quelques dizaines de micro-secondes, pour connaître l'évolution de chaque signal $S_1$ au cours de la période considérée.

Les valeurs stockées dans la mémoire 19 peuvent être les références des instants $t_1$ à $t_5$ au cours de la période $\Delta T$ considérée, ou la valeur totale $\Sigma_1$ du signal $S_1$ au cours de cette période, qui correspond à la durée pendant laquelle le signal $S_1$ a eu une valeur égale à 1. Cette valeur $\Sigma_1$ est égale à la somme des intervalles de temps où $S_1$ est égal à 1 soit, dans l'exemple représenté,

$$\Sigma_1 = \Delta T - t_5 + t_4 - t_3 + t_2 - t_1.$$

La valeur transmise à la mémoire 19 peut également être la moyenne $M_1$ de la valeur du signal $S_1$ au cours de la période $\Delta T$ ou tout autre valeur représentative de l'évolution du signal $S_1$ au cours de cette période.

La valeur transmise en $S'_1$ au microprocesseur 14 comme représentative du signal $S_1$ peut évoluer en fonction de la programmation du circuit 18. En effet, selon la nature du paramètre $S_1$, le type de l'unité 1 et sa configuration de fonctionnement, la valeur à transmettre au microprocesseur 14 peut être différente.

Grâce à l'invention, le circuit 18 fonctionne comme un "échantillonneur asynchrone" pour le microprocesseur 14 et permet une interrogation de certaines sorties de l'unité 1 en temps réel, alors que le fonctionnement du microprocesseur 14 n'est pas perturbé et que la puissance de calcul requise pour le microprocesseur 14 n'est pas trop importante.

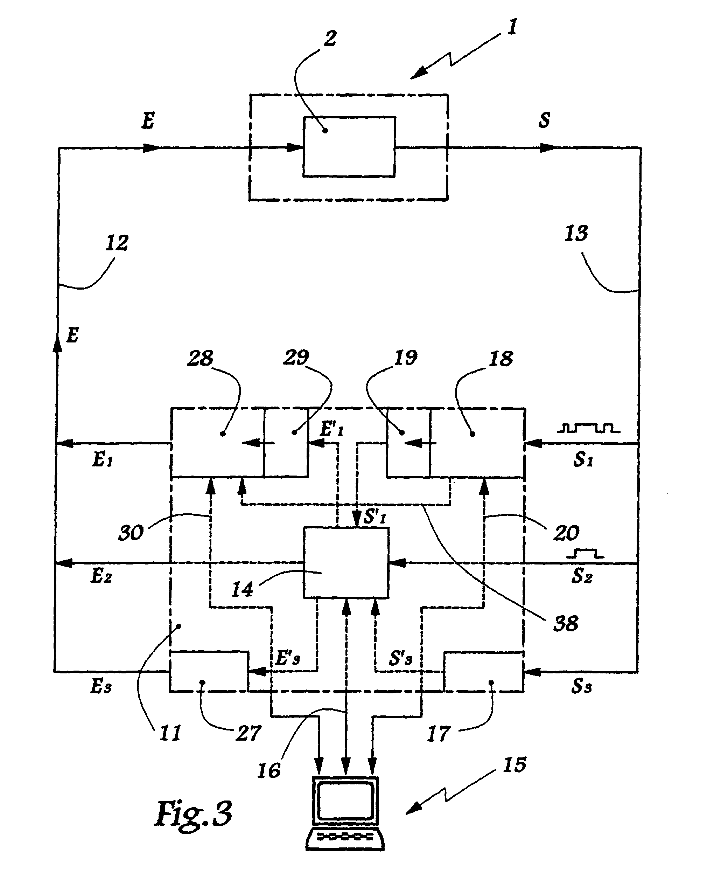

Dans le second mode de réalisation de l'invention représenté à la figure 3, les éléments analogues à ceux du mode de réalisation de la figure 1 portent des références identiques.

Ce mode de réalisation diffère du précédent essentiellement en ce que les signaux d'entrée E de l'unité 1 sont divisés en des signaux rapides $E_1$, en des signaux relativement lents $E_2$ et en des signaux analogiques $E_3$.

Les signaux $E_2$ sont générés directement par le microprocesseur 14 à la fin de chaque cycle de fonctionnement et transmis à l'unité 1. Les signaux $E_3$ sont

générés par un convertisseur numérique analogique (DAC) 27 à partir de signaux numériques $E'_3$ fournis par le microprocesseur 14.

Les signaux rapides $E_1$ sont générés par un second circuit logique programmable 28, du type du circuit 18 et qui est associé à une mémoire tampon 29.

Le fonctionnement est le suivant : Au terme d'un cycle de calcul, le microprocesseur 14 adresse à la mémoire 29 des signaux $E'_1$ représentatifs des différentes valeurs que doivent prendre les signaux $E_1$ au cours de la période suivante $\Delta T$. A partir de ces valeurs, et alors que le microprocesseur 14 calcule des valeurs suivantes et n'est pas en communication avec l'unité 1 ou la mémoire 29, le circuit 28 génère les signaux $E_1$ de simulation de l'unité 1. En d'autres termes, le circuit 28 permet de simuler, avec une grande précision dans le temps, les variations des signaux $E_1$ au cours d'une période $\Delta T$ pendant laquelle le microprocesseur 14 est dédié aux opérations de calcul.

Par exemple, le circuit 28 peut générer des impulsions simulant un capteur de vitesse incrémental qui, dans la réalité, peuvent être une succession de créneaux avec une période de l'ordre de quelques microsecondes.

Selon un aspect avantageux mais non obligatoire de l'invention, les circuits 18 et 28 sont reliés directement par une liaison 38 qui permet une transmission directe de certains signaux $S_1$ du circuit 18 vers le circuit 28, ces signaux étant traités par les circuits 18 et 28 pour générer certains signaux de sortie $E_1$ sans intervention du micro-processeur 14.

Les circuits 18 et 28 sont représentés comme deux entités séparées à la figure 3. Il est possible et avantageux de les intégrer dans un unique circuit électronique.

Quel que soit le mode de réalisation utilisé, le ou les circuits logiques programmables 18 ou 28 peuvent être configurés, par exemple au moyen de la console 15 à laquelle ils sont reliés par des liaisons 20 et 30, en fonction du type de l'unité 1 à contrôler et/ou de son environnement ultérieur, par exemple du type de matériel ferroviaire sur lequel elle doit être embarquée.

L'utilisation de circuits de type FPGA est avantageuse sur le plan économique car de tels circuits sont rapides, bien maîtrisés sur le plan technologique, donc fiables, et d'un coût abordable.

L'invention permet de simuler, en temps réel, des défauts, tels qu'un court-circuit d'un des bras d'un onduleur à haute tension et de vérifier, en temps réel la chronologie des impulsions de commande générées par une unité 1 pour les semi conducteurs de puissance simulés tels que des circuits GTO ou IGBT. En particulier, le temps minimum d'allumage ou le temps minimal de non allumage peuvent être efficacement contrôlés.

L'invention a été représentée avec un unique circuit FPGA en entrée et, dans le mode de réalisation de la figure 3, un unique circuit FPGA en sortie. Bien entendu, plusieurs tels circuits peuvent être utilisés, en entrée et/ou en sortie, selon la nature des signaux à traiter.

## Revendications

1. Procédé de test du fonctionnement d'une unité électronique (1) par simulation, ladite unité étant apte à générer des signaux logiques (S) à des instants spécifiques alors que la simulation est réalisée par un simulateur (11) équipé d'au moins un microprocesseur (14), ledit simulateur adressant à ladite unité des signaux de simulation en entrée (E) et recevant de celle-ci des signaux de sortie (S) en réaction, **caractérisé en ce qu'**il consiste à traiter, au fur et à mesure de leur émission, certains au moins des signaux de sortie ($S_1$) de ladite unité au moyen d'au moins un circuit logique programmable (18), ledit circuit logique étant apte à générer en temps réel des valeurs ($t_1$ - $t_5$, $\Sigma_1$, $M_1$) de paramètres correspondant auxdits signaux qu'il reçoit à stocker lesdites valeurs de paramètres dans une memoire (19) et à faire accéder ledit microprocesseur (14) auxdites valeurs de paramètres stockées, à une fréquence compatible avec sa vitesse de fonctionnement.

2. Procédé selon la revendication 1, **caractérisé en ce que** lesdites valeurs de paramètres sont représentatives des instants de commutation ($t_1$ - $t_5$) de signaux logiques ($S_1$) générés par ladite unité.

3. Procédé selon la revendication 2, **caractérisé en ce que** lesdites valeurs de paramètres sont une image desdits instants de commutation ($t_1$ - $t_5$), de la durée ($\Sigma_1$) pendant laquelle une variable logique a une valeur prédéterminée et/ou de la moyenne ($M_1$) de la valeur d'une variable logique sur une période prédéterminée.

4. Procédé selon l'une des revendications 1 à 3, **caractérisé en ce qu'**il consiste à adresser certains au moins des signaux ($E'_1$) générés par ledit microprocesseur (14) à au moins un second circuit logique programmable (28) et à adresser à ladite unité (1) des signaux de simulation ($E_1$) générés par ledit second circuit logique programmable alors que ledit microprocesseur n'est pas en communication avec ladite unité.

5. Dispositif de test du fonctionnement d'une unité électronique (1) par simulation, ladite unité étant apte à générer des signaux logiques (S) à des instants spécifiques, ledit dispositif incluant un simulateur (11) qui comprend au moins un microprocesseur (14) et qui est apte à adresser à ladite unité des signaux de simulation en entrée (E) et à recevoir de celle-ci des signaux de sortie (S) en réaction, **caractérisé en ce que** ledit simulateur comprend au moins un circuit logique programmable (18) apte à recevoir certains au moins ($S_1$) desdits signaux de sortie, ledit circuit logique étant apte à générer, en temps réel, des valeurs ($t_1$-$t_5$, $\Sigma_1$, $M_1$) de paramètres correspondant aux signaux ($S_1$) qu'il reçoit et à stocker lesdites valeurs de paramètres dans une mémoire (19), ledit microprocesseur (14) étant apte à acquérir lesdites valeurs de paramètres stockées, à une fréquence compatible avec sa vitesse de fonctionnement.

6. Dispositif selon la revendication 5, **caractérisé en ce que** ledit simulateur (11) comprend au moins un second circuit logique programmable (28) apte à adresser, en temps réel, des signaux de simulation ($E_1$) à ladite unité, à partir de signaux de consigne ($E'_1$) préalablement émis par ledit microprocesseur (14).

7. Dispositif selon la revendication 6, **caractérisé en ce que** ledit circuit logique programmable (18) apte à recevoir certains signaux de sortie ($S_1$) et ledit second circuit logique programmable (28) apte à adresser des signaux de simulation ($E_1$) à ladite unité (1) sont réalisés dans un même circuit électronique.

8. Dispositif selon l'une des revendications 5 à 7, **caractérisé en ce que** ledit ou lesdits circuits logiques programmables (18, 28) est ou sont de type FPGA (Field Programmable Gate Array - Réseau de Portes Programmables par l'utilisateur.

9. Dispositif selon l'une des revendications 5 à 8, **caractérisé en ce que** ledit simulateur (11) comprend en outre un convertisseur analogique/numérique (17), permettant de transmettre audit microprocesseur (14) des signaux numériques ($S'_3$) représentatifs de signaux analogiques ($S_3$) générés par ladite unité (1), et/ou un convertisseur numérique/analogique (27), permettant de transmettre à ladite unité (1) des signaux analogiques de simulation ($E_3$) à partir de signaux numériques ($E'_3$) générés par ledit microprocesseur.

10. Dispositif selon l'une des revendications 5 à 9, **caractérisé en ce que** ledit ou lesdits circuits logiques (18, 28) sont programmés en fonction du type et/ou de l'utilisateur prévue de ladite unité (1).

11. Installation de test d'unités électroniques à embarquer sur un matériel ferroviaire ou un véhicule électrique, **caractérisée en ce qu'**elle comprend au moins un dispositif (11 - 23) selon l'une des revendications 5 à 10.

**Patentansprüche**

1. Verfahren zur Funktionsprüfung einer elektronischen Einheit (1) durch Simulation, wobei die Einheit in der Lage ist, logische Signale (S) zu spezifischen Zeitpunkten zu erzeugen, und die Simulation durchgeführt wird durch einen Simulator (11), der mit wenigstens einen Mikroprozessor (14) ausgestattet ist, wobei der Simulator an die Einheit Eingangs-Simulationssignale (E) adressiert und von dieser als Reaktion Ausgangssignale (S) empfängt, **dadurch gekennzeichnet, dass** es darin beruht, im Laufe ihres Sendens wenigstens bestimmte Ausgangssignale ($S_1$) der Einheit mit Hilfe wenigstens einer programmierbaren logischen Schaltung (18) zu verarbeiten, wobei die logische Schaltung in der Lage ist, in Echtzeit Werte ($t_1$ - $t_5$, $\Sigma_1$, $M_1$) von Parametern zu erzeugen, die den Signal, die sie empfängt, entsprechen, die Parameterwerte in einem Speicher (19) zu speichern und den Mikroprozessor (14) auf die gespeicherten Parameterwerte mit einer mit seiner Arbeitsgeschwindigkeit vereinbaren Frequenz zugreifen zu lassen.

2. Verfahren nach Anspruch 1, **dadurch gekennzeichnet, dass** die Parameterwerte repräsentativ für Umschaltzeitpunkte ($t_1$ - $t_5$) von von der Einheit erzeugten logischen Signalen ($S_1$) sind.

3. Verfahren nach Anspruch 2, **dadurch gekennzeichnet, dass** die Parameterwerte ein Abbild der Umschaltzeitpunkte ($t_1 t_5$), der Dauer ($\Sigma_1$), während der eine logische Variable einen vorgegebenen Wert hat, und/oder des Mittelwerts ($M_1$) des Werts einer logischen Variablen während einer vorgegebenen Zeitspanne sind.

4. Verfahren nach einem der Ansprüche 1 bis 3, **dadurch gekennzeichnet, dass** es darin beruht, wenigstens bestimmte der von dem Mikroprozessor (14) erzeugten Signale ($E'_1$) an wenigstens eine zweite programmierbare logische Schaltung (28) zu adressieren und an die Einheit (1) Simulationssignale ($E_1$) zu adressieren, die von der zweiten programmierbaren logischen Schaltung erzeugt werden, wenn der Mikroprozessor nicht in Kommunikation mit der Einheit ist.

5. Vorrichtung zur Funktionsprüfung einer elektronischen Einheit (1) durch Simulation, wobei die Einheit in der Lage ist, logische Signale (S) zu spezifischen Zeitpunkten zu erzeugen, wobei die Vorrichtung einen Simulator (11) beinhaltet, der wenigstens einen Mikroprozessor (14) umfasst und in der Lage ist, an die Einheit Eingangs-Simulationssignale (E) zu adressieren und von dieser als Reaktion Ausgangssignale (S) zu empfangen, **dadurch gekennzeichnet, dass** der Simulator wenigstens eine programmierbare logische Schaltung (18) umfasst, die in der Lage ist, wenigstens bestimmte ($S_1$) der Ausgangssignale zu empfangen, wobei die logische Schaltung in der Lage ist, in Echtzeit Werte ($t_1$ - $t_5$, $\Sigma_1$, $M_1$) von Parametern zu erzeugen, die den Signalen ($S_1$), die sie empfängt, entsprechen, und die Parameterwerte in einem Speicher (19) zu speichern, und dass der Mikroprozessor (14) in der Lage ist, die gespeicherten Parameterwerte mit einer mit seiner Arbeitsgeschwindigkeit vereinbaren Frequenz aufzunehmen.

6. Vorrichtung nach Anspruch 5, **dadurch gekennzeichnet, dass** der Simulator (11) wenigstens eine zweite programmierbare logische Schaltung (28) umfasst, die in der Lage ist, in Echtzeit Simulationssignale ($E_1$) an die Einheit ausgehend von zuvor von dem Mikroprozessor (14) gesendeten Sollsignalen ($E'_1$) zu adressieren.

7. Vorrichtung nach Anspruch 6, **dadurch gekennzeichnet, dass** die programmierbare logische Schaltung (18), die in der Lage ist, bestimmte Ausgangssignale ($S_1$) zu empfangen, und die zweite programmierbare logische Schaltung (28), die in der Lage ist, Simulationssignale ($E_1$) an die Einheit (1) zu adressieren, in einer gleichen elektronischen Schaltung realisiert sind.

8. Vorrichtung nach einem der Ansprüche 5 bis 7, **dadurch gekennzeichnet, dass** die programmierbare(n) logische(n) Schaltung(en) vom FPGA-Typ (Field Programmable Gate Array) ist/sind.

9. Vorrichtung nach einem der Ansprüche 5 bis 8, **dadurch gekennzeichnet, dass** der Simulator (11) ferner einen Analog-Digital-Wandler (17) umfasst, der es ermöglicht, an den Mikroprozessor (14) digitale Signale ($S'_3$) zu übertragen, die für von der Einheit (1) erzeugte analoge Signale ($S_3$) repräsentativ sind, und/oder einen Digital-Analog-Wandler (27) umfasst, der es ermöglicht, an die Einheit (1) analoge Simulationssignale ($E_3$) ausgehend von von dem Mikroprozessor erzeugten digitalen Signalen ($E'_3$) zu senden.

10. Vorrichtung nach einem der Ansprüche 5 bis 9, **dadurch gekennzeichnet, dass** der oder die logische(n) Schaltung(en) (18, 28) in Abhängigkeit vom vorgesehenen Typ und/oder Benutzer der Einheit (1) programmiert sind.

11. Anlage zur Überprüfung von auf rollendem Eisenbahnmaterial oder einem elektrischen Fahrzeug mitzuführenden elektronischen Einheiten, **dadurch gekennzeichnet, dass** sie wenigstens eine Vorrichtung (11-23) nach einem der Ansprüche 5 bis 10 umfasst.

**Claims**

1. A method of testing the operation of an electronic unit (1) by simulation, said unit being suitable for generating logic signals (S) at specific instants while the simulation is being performed by a simulator (11) fitted with at least one microprocessor (14), said simulator sending simulated input signals (E) to said unit and receiving output signals (S) therefrom in response thereto, the method being **characterized in that** it consists in processing at least some of the output signals ($S_1$) from said unit as they are issued by means of at least one programmable logic circuit (18), said logic circuit being suitable for generating, in real time, values ($t_1$ to $t_5$, $\Sigma_1$, $M_1$) of parameters corresponding to said signals which it receives, in storing said values of parameters in a memory (19), and in causing said microprocessor (14) to access said stored parameter values at a frequency which is compatible with its own operating frequency.

2. A method according to claim 1, **characterized in that** said parameter values are representative of switching instants ($t_1$ to $t_5$) of logic signals ($S_1$) generated by said unit.

3. A method according to claim 2, **characterized in that** said parameter values are an image of said switching instants ($t_1$ to $t_5$), of the duration ($\Sigma_1$) during which a logic variable has a predetermined value, and/or the mean value ($M_1$) of a logic variable over a predetermined period.

4. A method according to any one of claims 1 to 3, **characterized in that** it consists in sending at least some of the signals ($E'_1$) generated by said microprocessor (14) to at least one second programmable logic circuit (28) and in sending simulation signals ($E_1$) to said unit (1), the simulation signals being generated by said second programmable logic circuit while said microprocessor is not in communication with said unit.

5. Apparatus for testing the operation of an electronic unit (1) by simulation, said unit being suitable for generating logic signals (S) at specific instants, said apparatus including a simulator (11) which comprises at least one microprocessor (14) and which is suitable for sending input simulation signals (E) to said unit and for receiving output signals (S) therefrom in response thereto, the apparatus being **characterized in that** said simulator comprises at least one programmable logic circuit (18) suitable for receiving at least some of said output signals ($S_1$), said logic circuit being suitable, in real time, for generating parameter values ($t_1$ to $t_5$, $\Sigma_1$, $M_1$) corresponding to the signals ($S_1$) that it receives, and for storing said parameter values in a memory (19), said microprocessor (14) being suitable for acquiring said stored parameter values at a frequency compatible with its operating speed.

6. Apparatus according to claim 5, **characterized in that** said simulator (11) comprises at lest one second programmable logic circuit (28) suitable, in real time, for sending simulation signals ($E_1$) to said unit on the basis of reference signals ($E'_1$) previously issued by said microprocessor (14).

7. Apparatus according to claim 6, **characterized in that** said programmable logic circuit (18) suitable for receiving certain output signals ($S_1$) and said second programmable logic circuit (28) suitable for sending simulation signals ($E_1$) to said unit (1) are implemented as a single electronic circuit.

8. Apparatus according to any one of claims 5 to 7, **characterized in that** said programmable logic circuit(s) (18, 28) is/are of the field programmable gate array type.

9. Apparatus according to any one of claims 5 to 8, **characterized in that** said simulator (11) further comprises an analog-to-digital converter (17) enabling digital signals ($S'_3$) representative of analog signals ($S_3$) generated by said unit (1) to be forwarded to said microprocessor (14), and/or an analog-to-digital converter (27) enabling analog simulation signals ($E_3$) based on digital signals ($E'_3$) generated by said microprocessor to be forwarded to said unit (1).

10. Apparatus according to any one of claims 5 to 9, **characterized in that** said logic circuit(s) (18, 28) is/are programmed as function of the type and/or intended use of said unit (1).

11. An installation for testing electronic units for fitting to a rail vehicle or to an electric vehicle, the installation being **characterized in that** it comprises at least one apparatus (11 to 23) according to any one of claims 5 to 10.

Fig.1

**Fig.2**

Fig.3